# EUROPEAN PATENT APPLICATION

(11) **EP 1 974 613 A1**
(43) Date of publication of application: **01.10.2008**
(21) Application number: 07104703.9
(22) Date of filing: 22.03.2007
(51) Int. Cl.: A23B 7/154, A23B 7/157, A23B 7/06, A23L 1/217, A23L 1/272

(54) **Process for preventing or reducing after-cooking darkening in potatos**

(71) Applicant: PURAC Biochem BV, 4206 AC Gorinchem (NL)
(72) Inventor: Boerboom, Frank, 3707 BH, Zeist (NL); Evers, Inge, 4201 BH, Gorinchem (NL); Nanninga, Gert. L., 4283 HH, Giessen (NL)
(74) Representative: Beetz, Tom

(57) **Abstract**

The invention relates to a process for preventing or reducing after-cooking darkening in par-fried potato food products, comprising forming treated potato food products by contacting blanched potato food products with a composition comprising lactic acid. The composition may further contain calcium lactate .and/or SAPP.

## Description

This invention relates to a process for preventing or reducing after-cooking darkening in par-fried potato food products.

After potatoes are cooked, they develop a dark bluishgray pigmentation known as after-cooking darkening. This pigmentation is due to formation of a complex of ferric (Fe³⁺) ions with chlorogenic acid. In freshly cooked potatoes, a colorless chlorogenic acid-ferrous iron (Fe²⁺) complex is formed, and is subsequently oxidized in air to the colored chlorogenic acid-ferric iron complex.

Various factors are known to affect after-cooking darkening. An overview has been given in US 5,391,384, which patent advocates the use of calcium acetate. It is believed that calcium acetate and the other mentioned chemicals reduce pigmentation by sequestering or chelating the iron in the potato so that it is held in a non-ionizable form and cannot take part in a reaction with chlorogenic acid, thereby preventing the formation of the dark colored pigment.

However, despite these investigations most used chemical in preventing after-cooking darkening in the process of making par-fried potato products, such as French fries which can be made in French fry processors, do use SAPP (disodium acid pyrophosphate) which is now used routinely for the treatment of blanched potato products before frying and freezing. SAPP treated potatoes can develop a bitter chemical taste, and more recently it has been reported to be a concern to chemical additive-conscious consumers. In addition, SAPP is disadvantageous in view of its cost.

There is a need to provide an improved process of achieving prevention of after-cooking darkening of potato food products.

Several patents disclose the use of calcium for pretreating potatoes. U.S. Pat. No. 2,893,878 discloses treatment of potatoes with calcium chloride to inhibit browning of raw potatoes; U.S. Pat. 2,894,843 discloses the treatment of freshly peeled potatoes with calcium sulfite to inhibit discoloration of the raw vegetable; U.S. Pat. No. 2,987,401 discloses treatment of peeled potatoes with calcium phytate to inhibit discoloration of the raw potato; U.S. Pat. No. 3,051,578 discloses the treatment of potatoes with EDTA and salts thereof, including calcium, for preventing greening in unpeeled potatoes; U.S. Pat. No. 3,063,849 discloses the production of dehydrated cooked potatoes by precooking potato slabs in water containing calcium ions; U.S. Pat. Nos. 4,818,549 and 4,911,940 disclose treating apple cubes with a solution containing calcium chloride. In addition, U.S. Pat. No. 2,212,461 discloses the preparation of French fried potatoes in which the potato food products are soaked for a prolonged period prior to cooking in a solution of acetic acid to avoid a non-uniform color and burnt taste arising from high sugar levels. In US 5,391,384 the procedure of dipping blanched potato food products in calcium acetate solution in order to control after-cooking darkening of French fries is disclosed. However, the use of calcium acetate in combination with the commonly used SAPP leads to precipitation of solid materials.

In the production of potato derived products such as starches, potato flakes,potato granules and the like often antioxidants such as sulfites are used to prevent darkening of the products. Sulfites are allergenic and suspected to be harmful to the human body.

The present invention is directed towards a novel process for reducing or preventing after-cooking darkening in par-fried potato food products, without having the disadvantages of prior art methods, having a better performance without the occurrence of precipitation, and preferably having additional advantages which have become important the last years in food processing.

According to an aspect of the invention, there is provided a process for preventing or reducing after-cooking darkening in par-fried potato food products, comprising forming treated potato food products by contacting blanched potato food products with a composition comprising lactic acid.

In a preferred aspect of the invention the lactic acid is present in at least 0.3 wt. %, preferably at least 0.6 wt.% of the composition. It was found that lactic acid is able to effectively prevent discoloration and darkening of par-fried potato food, which includes French fries, sliced potato, scalloped potatoes, au gratin potatoes, and the like. This invention can also be applied in the production of potato-derived products such as potato granules, potato flakes, potato protein products, and potato starch.

In another aspect of the invention the composition includes calcium ions in addition to the lactic acid. The addition of lactic acid has a further advantage of preventing or at lest reducing the forming of acrylamide, which is a toxic compound that is easily formed during heating of potato products. Most preferred, the calcium ion is added in the form of calcium lactate.

In the process of the invention, a composition is used to treat potato food products. Such composition may apart from lactic acid further comprise another material or a mixture of materials fulfilling both the requirements of complexing chlorogenic acid and inhibiting oxidation, or may be a combination of materials each fulfilling one of the requirements.

The composition used preferably comprises calcium lactate in a 0.1 to 3 wt.% aqueous solution, more preferably 0.4 to 0.8 wt.%. The calcium lactate may advantageously be employed at a pH of about 3.5 or lower. Best results are obtained at pH lower than 3. This solution is used to contact the potato food products for about 30 to 180 seconds. According to this procedure the lactic acid, and if present the calcium lactate, fulfill both the requirement of complexing chlorogenic acid and inhibiting oxidation. The lactic acid prevents the chlorogenic acid to be in the ionic form, whereas calcium ion complexes the chlorogenic acid and the lactate ion inhibits oxidation of the ferrous ion.

Alternatively, the process may include using a combination of 0.1 to 5 wt.% lactic acid, preferably 0.3 to 1.5 wt.%, 0 to 3 wt% calcium lactate with about 0.1 to 1 wt % disodium acid pyrophosphate (SAPP). It is current commercial practice for reducing after-cooking darkening in French fries to use 0.3 to 0.8 wt.% SAPP solution. This invention permits a lower concentration of SAPP to be used or complete elimination thereof in order to eliminate negative taste effects and to eliminate detrimental effects to the environment. Lactic acid and calcium lactate being a natural and a non environmentally damaging product while achieving an at least satisfactory or improved prevention of after-cooking darkening.

The invention is further illustrated by the following non-limitative examples.

Various calcium salts were tested with or without SAPP, focusing on the colorization of potatoes. Severe precipitation occurred.

### Materials

Potatoes, table potatoes (ex Nettorama)
Calcium lactate Pentahydrate food grade (ex Purac)
Calcium acetate (ex Acres; analytical grade)
Calcium chloride anhydrous (ex Acros; analytical grade)
Disodium acid pyrophosphate (ex Budenheim)
PURAC 80 (ex Purac; lactic acid food grade)

### Method

Washing and slicing potatoes.
The potatoes were sliced and kept in water until use.
The potatoes were blanched for 3 minutes at approx. 70 °C, Slices of one potato were distributed over 12 different washing bags, one bag per solution and thereafter dipped for 2 minutes at 50 °C in 600 ml of a test solution.
The excess of water was removed from the slices, and the slices were stored in sample cups without lid to allow contact with air.
After 24 hours the colorization was evaluated, and samples were ranked according to color from "bad" (black) color to "good" yellowish color by a three panel expert panel and the pH of solutions were measured.

The compositions are given in table I:

| Entry | SAPP¹⁾ | Ca lactate | Ca acetate | Ca chloride | LA | pH of solutions before dipping |
|---|---|---|---|---|---|---|
| 1 | 0.5 | 0.6 | | | 2 | 2.86 |
| 2 | 0.5 | 0.6 | | | 1 | 3.21 |
| 3* | 0.5 | 0.6 | | | 0 | 4.09 |
| 4 | 0.2 | 0.6 | | | 1.2 | 3.11 |
| 5 | 0.2 | 0.6 | | | 0.6 | 3.44 |
| 6* | 0.2 | 0.6 | | | 0 | 4.10 |
| 7 | 0.1 | 0.6 | | | 0.6 | 3.43 |
| 8 | 0.1 | 0.6 | | | 0.3 | 3.78 |
| 9* | 0.1 | 0.6 | | | 0 | 4.31 |
| 10 | 0.5 | 0.2 | | 0.2 | 1 | 2.77 |
| 11* | 0.5 | 0.2 | | 0.2 | 0 | 3.51 |
| 12 | 0.2 | 0.2 | | 0.2 | 0.6 | 2.94 |
| 13* | 0.2 | 0.2 | | 0.2 | 0 | 3.68 |
| 14* | 0 | 0.6 | | | 0 | 6.75 |
| 15* | 0 | 0.2 | | 0.2 | 0 | 7.11 |
| 16 | 0 | 0.6 | | | 1 | 3.18 |
| 17* | 0 | | 0.308 | | 0 | 7.33 |
| 18* | 0 | | | 0.286 | 0 | 6.90 |
| 19 | 0 | | 0.308 | | 1 | 3.31 |
| 20* | 0 | | | | 0 | 6.60 |
| 21* | 0.5 | | | | 0 | 4.61 |
| 22* | 0.2 | | | | 0 | 4.76 |
| 23 | 0.1 | | | | 0 | 4.84 |

| | | | | | | |
|---|---|---|---|---|---|---|
| 1) all values are in wt.% * according to prior art | | | | | | |

In Table 2 the samples were judged on color and ranked from bad (black) to good (yellowish).

| Entry | Evaluation based on color | Precipitation |
|---|---|---|
| 18* | | |
| 20* | | |
| 15* | | |
| 17* | All samples suffer from severe colorization, black outer layers | |
| 14* | | |
| 23* | | |
| 21* | | |
| 9* | | severe |
| 11* | Colorization of outer layers less intense compared to above mentioned samples | severe |
| 22* | | |
| 3* | | severe |
| 7 | | |
| 16 | | |
| 19 | Samples are too white | |
| 8 | | |
| 6* | | severe |
| 10 | Slight colorization around pit | |
| 13* | | severe |
| 12 | | |
| 5 | Good color, slightly yellow | |
| 4 | | |
| 2 | | |
| 1 | | |

The entries indicated with an asterisk are compositions according to the prior art. As can be seen, the prior art compositions show strong after-cooking darkening, with the exception of entries 6 and 13. Prior art entries 6 and 13, however, show severe precipitation of SAPP, for which these are undesired. The entries according to this invention (1, 2, 4, 5, 7, 8, 10, 12, 16, and 19) showed reasonable to excellent reduction of darkening and no precipitation of SAPP. Best results were obtained with compositions comprising lactic acid, calcium lactate and SAPP (entries 1, 2, 4, 5, and 12). A similar composition having much lower calcium lactate content (entry 10) is slightly less advantageous).

## Claims

**1.** A process for preventing or reducing after-cooking darkening in par-fried potato food products, comprising forming treated potato food products by contacting blanched potato food products with a composition comprising lactic acid.

**2.** The process according to claim 1, wherein the lactic acid is present in 0.1 to 5 wt. %, preferably in 0.3-1.5 wt.% of the composition.

**3.** The process according to claim 1 or 2, wherein the composition includes calcium ions.

**5.** The process according to claim 3, wherein the composition includes calcium lactate

**6.** The process according to claim 1 or 2, wherein the composition includes disodium acid pyrophosphate (SAPP).

**7.** The process according to claim 3, wherein the composition includes SAPP.

**8.** The process according to claim 5, wherein the calcium ions are up to 0.4 wt.% of the composition.

**9.** The process according to claim 6 or 7, wherein the amount of SAPP is in a concentration of 0.1 to 1 wt.%.

**10.** The process according to any one of claims 1-9, wherein the pH of the composition is smaller than 4.0, preferably smaller than 3.5.
